# EUROPEAN PATENT APPLICATION

(11) **EP 3 748 436 A1**
(43) Date of publication of application: **09.12.2020**
(21) Application number: 19743598.5
(22) Date of filing: 29.01.2019
(51) Int. Cl.: G03H 1/22

(54) **IMAGE REPRODUCTION DEVICE**

(30) Priority: 29.01.2018 JP 2018012702; 30.03.2018 JP 2018070200
(71) Applicant: Equos Research Co., Ltd., Tokyo 101-0021 (JP)
(72) Inventor: NAGAHAMA, Masatoshi, Tokyo 101-0021 (JP)
(74) Representative: Potter Clarkson
(86) International application number: PCT/JP2019/003014
(87) International publication number: WO 2019/146804

(57) **Abstract**

Provided is an image reproduction device, comprising: a reflection hologram which reflects reproduction illumination light emitted from a first side to reproduce a reproduced image on the first side, and a beam splitting element which is arranged on the first side of the reflection hologram, which reflects the reproduction illumination light which has been emitted from a reproduction light source and which has passed through the reflection hologram, which emits the reflected reproduction illumination light toward the reflection hologram from the first side, and which transmits light of a reproduced image reproduced by the reflection hologram.

## Description

### FIELD

The present invention relates to an image reproduction device using a reflection hologram.

### BACKGROUND

Holograms are classified into transmission holograms or reflection holograms depending on whether the reproduced image is reproduced by the transmission or reflection of the irradiated light.

Reflection holograms exemplified by a Lippman hologram have an advantage of high wavelength selectivity as compared with transmission holograms. For example, Lippman holograms act only on light in a specific narrow wavelength range, even when a common light source which emits light in a wide wavelength range, such as an LED (Light-Emitting Diode) or a light bulb, is used as the reproduction light source, and thus, have small chromatic dispersion. Thus, in Lippman holograms, blurring of the reproduced image can be suppressed even if the reflection hologram is produced with a practical recording material of, for example, several µm to several tens of µm. Further, reflection holograms have an advantage in that it is easy to color the reproduced image, whereby a reproduced image having high quality as compared with a transmission hologram can be reproduced.

Conversely, since the reproduction light source can be arranged on the side opposite the side on which the reproduced image is observed in transmission holograms, they have an advantage that the size of the device can easily be reduced.

For example, Japanese Patent Application Laid Open No. 2012-514229 (Hereafter, referred to as JP2012-514229A) and No. 1992(H4)-355713 (Hereafter, referred to as JP1992-355713A) describe devices in which a reproduction light source for irradiating a reflection hologram with reproduction illumination light is arranged on the back side of the hologram. In the device described in JP2012-514229A, the light emitted from the back side of the reflection hologram, is reflected using a special holographic optical element (HOE: Holographic Optical Element) so that the light is emitted from the front side of the reflection hologram. Further, the device described in JP1992-355713A is provided with a planar mirror which is arranged so that the surface thereof is inclined with respect to the reflection hologram, whereby the light emitted from the back side of the reflection hologram is reflected by the planar mirror, and the light irradiates the reflection hologram from the front side.

### SUMMARY

However, in the device of JP2012-514229A, since the light emitted from below the reflection hologram is reflected using a special holographic optical element, the size of the device increases. Further, in the device described in JP1992-355713A, since the planar mirror is arranged so that the surface thereof is inclined with respect to the reflection hologram, not only does the size of the device increase, but depending on the observation direction, the planar mirror may prevent the viewing of the reproduced image, whereby the visual field in which the observer can view the reproduced image is limited.

It is an object of the present invention to provide an image reproduction device which is small in size and which has a wide viewing area using a reflection hologram.

The image reproduction device according to an aspect of the present invention comprises a reflection hologram which reflects reproduction illumination light emitted from a first side to reproduce a reproduced image on the first side, and a beam splitting element which is arranged on the first side of the reflection hologram, which reflects the reproduction illumination light which has been emitted from a reproduction light source and which has passed through the reflection hologram, which emits the reflected reproduction illumination light toward the reflection hologram from the first side, and which transmits light of a reproduced image reproduced by the reflection hologram.

Furthermore, the image reproduction device according to another aspect of the present invention comprises a reflection hologram which reflects reproduction illumination light emitted from a first side to reproduce a reproduced image on the first side, and a beam splitting element which is arranged on the first side of the reflection hologram, which transmits a part or all of the reproduction illumination light to the reflection hologram, and which reflects a part or all of light of a reproduced image reproduced by the reflection hologram toward the reflection hologram.

According to the present invention, there is provided an image reproduction device which has a small size and which has a wide viewing area using a reflection hologram.

### BRIEF DESCRIPTION OF DRAWINGS

FIG. 1 is a view schematically illustrating a configuration of an image reproduction device according to a first embodiment.
FIG. 2 is a view schematically illustrating a configuration of an image reproduction device according to a second embodiment.
FIG. 3 is a view schematically illustrating a configuration of an image reproduction device according to a third embodiment.
FIG. 4 is a view schematically illustrating a configuration of an image reproduction device according to a fourth embodiment.
FIG. 5 is a view schematically illustrating a configuration of an image reproduction device according to a fifth embodiment.
FIG. 6 is a view schematically illustrating a configuration of an image reproduction device according to a sixth embodiment.
FIG. 7 is a view schematically illustrating a configuration of an image reproduction device according to a seventh embodiment.
FIG. 8 is a view schematically illustrating a configuration of an image reproduction device according to an eighth embodiment.

### DESCRIPTION OF EMBODIMENTS

The image reproduction device of the present invention comprises a beam splitting element arranged on the front side thereof, which is the side on which the image of the reflection hologram is reproduced. The beam splitting element reflects the reproduction illumination light which has been emitted from the reproduction light source and which has passed through the reflection hologram, emits the reflected reproduction illumination light from the front side onto the reflection hologram, and transmits light of the reproduced image reproduced by the reflection hologram.

Furthermore, another image reproduction device of the present invention comprises a reflection hologram which reflects the reproduction illumination light emitted from the first side and which reproduces a reproduced image on the first side, and a beam splitting element arranged on the first side of the reflection hologram. The beam splitting element transmits a part or all of the reproduction illumination light to the reflection hologram, and reflects a part or all of the light of a reproduced image reproduced by the reflection hologram toward the reflection hologram.

As a result, in the image reproduction device of the present invention, the reproduction light source can be arranged on the side opposite the side on which the reproduced image is observed without the use of a special holographic optical element, a planar mirror, etc. Thus, in the image reproduction device of the present invention, the size of the device can be reduced and a wide visual range can be achieved without hindering the visual recognition of the reproduced image.

The preferred embodiments of the present invention will be described below with reference to the attached drawings. The present invention is not limited to the following embodiments. The present invention can be appropriately modified without departing from the gist thereof. Furthermore, in the drawings, components having the same or corresponding functions have been assigned the same reference sign and descriptions thereof may be omitted or simplified.

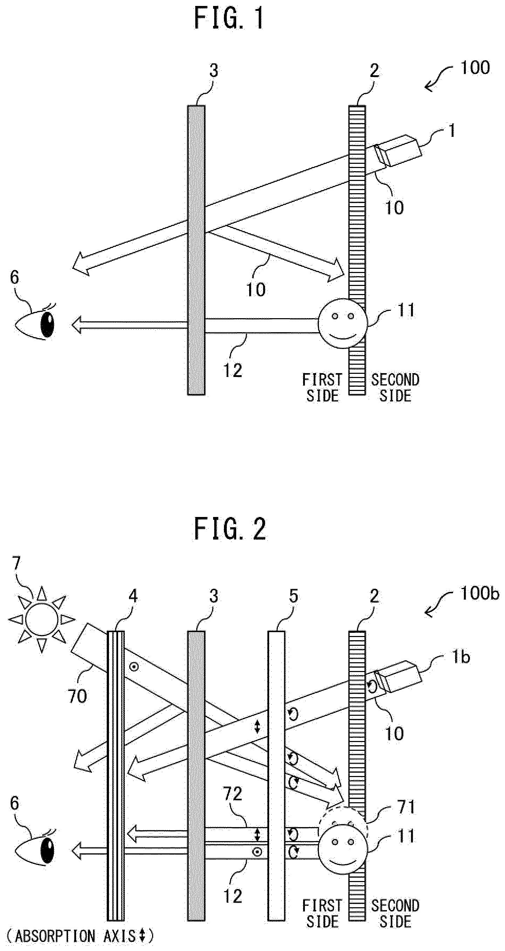

[First Embodiment] FIG. 1 is a view schematically illustrating the configuration of an image reproduction device 100 according to a first embodiment. The image reproduction device 100 of the present embodiment comprises a reflection hologram 2 and a beam splitting element 3.

A reproduction light source 1 is arranged on the back side of the reflection hologram 2 (second side, the right side in the drawing), and reproduction illumination light 10 passes through the reflection hologram 2 and the reproduction illumination light 10 is emitted toward the beam splitting element 3. The reproduction illumination light 10 has the same wavelength components as recording light when am object image is recorded on the reflection hologram 2. In general, a laser light source is used as the reproduction light source 1, but a common light source such as an LED or light bulb can be used.

The reflection hologram 2 reflects the reproduction illumination light 10 emitted from the front side of the reflection hologram 2 (first side, the left side in the drawing) and reproduces a reproduced image 11 on the front side. As the reflection hologram 2, for example, a Lippman hologram is used.

The beam splitting element 3 is arranged on the front side of the reflection hologram 2. The beam splitting element 3 reflects the reproduction illumination light 10 emitted from the reproduction light source 1 and transmitted through the reflection hologram 2, irradiates the front side of the reflection hologram 2, and permits light 12 of the reproduced image 11 reproduced by the reflection hologram 2 to pass therethrough.

A beam splitter which reflects a portion of the irradiated light and transmits the remainder is used as the beam splitting element 3. As a result, the beam splitting element 3 can transmit the light 12 of the reproduced image 11 reproduced by the reflection hologram 2 while the reflecting the reproduction illumination light 10 emitted from the reproduction light source 1 toward the reflection hologram 2.

In FIG. 1, the reproduction illumination light 10 emitted from the reproduction light source 1 is reflected by the beam splitting element 3 and irradiates the front side of the reflection hologram 2. As a result, the reproduced image 11 is reproduced on the front side of the reflection hologram 2, and the light 12 of the reproduced image 11 is transmitted again through the beam splitting element 3 and is observed by the observer 6.

As described above, the image reproduction device of the present embodiment comprises a beam splitting element arranged on the front side on which the image of the reflection hologram is reproduced. Further, the beam splitting element reflects the reproduction illumination light emitted from the reproduction light source to irradiate the front side of the reflection hologram with the reproduction illumination light, and transmits the light of the reproduced image reproduced by the reflection hologram.

According to such a configuration, a device in which a reproduction light source that emits reproduction illumination light is arranged on the back side of the hologram is realized by the use of a reflection hologram. As a result, the size of the image reproduction device which is capable of reproducing a clear image is reduced. Furthermore, since such a configuration does not have a planar mirror or the like, there is provided an image reproduction device which does not interfere with visual recognition of an image and which has a wide visual range.

Note that though the reflection hologram and the beam splitting element a separated from each other by a space for the sake of convenience in FIG. 1, the reflection hologram and the beam splitting element are preferably arranged so as to overlap each other. As a result, the size of the image reproduction device is further reduced. Furthermore, since the edge of the reflection hologram or the beam splitting element does not overlap the light of the reproduced image regardless of the direction of observation, when the observer observes the reproduced image, discontinuous reproduction of the reproduced image at the edge is prevented.

[Second Embodiment] FIG. 2 is a view schematically illustrating the configuration of the image reproduction device 100b according to a second embodiment. The image reproduction device 100b of the present embodiment, in addition to the configuration of the first embodiment shown in FIG. 1, further comprises a polarization plate 4 and a quarter-wave plate 5. Further, a reproduction light source 1b of the present embodiment emits the reproduction illumination light 10 of circularly-polarized light. The other structures of the image reproduction device 100b are the same as those of the first embodiment, and thus, the points which differ from the first embodiment will be described below.

The polarization plate 4 and the quarter-wave plate 5 are used in combination, and function as an optical isolator which suppresses external light reflection by external light 70 from an external light source 7, such as the sun or a fluorescent lamp, on the first side of the reflection hologram 2. The function of the polarization plate 4 and the quarter-wave plate 5 as an optical isolator is maximized when the fast axis and the slow axis of the quarter-wave plate 5 which are orthogonal to each other are inclined by 45° with respect to the optical transmission axis of the polarization plate 4, but the present embodiment is not limited thereto. The fast axis or the slow axis of the quarter-wave plate 5 may be inclined at an angle of 0° to 90° with respect to the optical transmission axis of the polarization plate 4.

The polarization plate 4 is arranged on the side of the beam splitting element 3 opposite the reflection hologram 2. The polarization plate 4 shown in FIG. 2 has a light absorption axis along a first axial direction, absorbs the polarization component of the light transmitted through the polarization plate 4 along the first axial direction, and transmits the polarization component along the second axial direction orthogonal to the first axial direction. As the polarization plate 4, for example, a polarization plate in which an iodine compound or a two-color organic dye is adsorbed and oriented on a polyvinyl alcohol (PVA) film or the like is used.

The quarter-wave plate 5 is arranged between the reflection hologram 2 and the beam splitting element 3, and imparts a phase difference corresponding to a quarter wavelength between the polarization component in the fast axial direction and the polarization component in the slow axial direction of the light transmitted through the quarter-wave plate 5. Thus, the quarter-wave plate 5 changes the polarization state of the light transmitted through the quarter-wave plate 5 as shown in, for example, the table below. The first axial direction is a polarization axial direction parallel to the light absorption axis of the polarization plate 4, and the second axial direction is a polarization axial direction perpendicular to the light absorption axis of the polarization plate 4.

**[Table 1]**

| Prior to Transmission | After Transmission |
|---|---|
| Right Circularly-Polarized Light | Linearly-Polarized Light Parallel to First Axial Direction |
| Linearly-Polarized Light Parallel to First Axial Direction | Left Circularly-Polarized Light |
| Left Circularly-Polarized Light | Linearly-Polarized Light Parallel to Second Axial Direction |
| Linearly-Polarized Light Parallel to Second Axial Direction | Right Circularly-Polarized Light |

It is preferable that the quarter-wave plate 5 have a broadband property which imparts a phase difference corresponding to a wavelength of approximately one-fourth with respect to transmitted light in the visible light range of 400 to 700 nm. Furthermore, the quarter-wave plate 5 preferably has a low angular dependence on incident light in the visible light range of 400 to 700 nm.

The reproduction light source 1b emits the reproduction illumination light 10 which is circularly-polarized in advance so that the reproduction illumination light 10 transmitted through the quarter-wave plate 5 becomes linearly-polarized light along the first axial direction. The reproduction light source 1b which emits the reproduction illumination light 10 of such right circularly-polarized light is configured as, for example, a combination of a laser light source for outputting linearly-polarized light which is parallel to the second axial direction, and a quarter-wave plate which changes the polarization state of the light as shown in the table above.

The light source for outputting the linearly-polarized light, in addition to using a laser light source, may be configured as a combination of a light source such as an LED or a light bulb for emitting non-polarized light and a polarization plate. For example, the light source for outputting linearly-polarized light parallel to the first axial direction is configured by a combination of a light source for emitting non-polarized light and a polarization plate having an optical transmission axis in the first axial direction. Furthermore, the light source for outputting the linearly-polarized light parallel to the second axial direction is configured by a combination of a light source for emitting non-polarized light and a polarization plate having an optical transmission axis in the second axial direction.

Thus, the reproduction light source 1b which emits the reproduction illumination light 10 which is right-circularly-polarized can be constituted by arranging, in this order, a light source which emits non-polarized light, a polarization plate having an optical transmission axis in the second axial direction, and a quarter-wave plate for changing the polarization state as shown in the above table. In this case, the polarization plate having an optical transmission axis in the second axial direction and the quarter-wave plate for changing the polarization state as shown in the above table may be configured separately from the light source for emitting non-polarized light, and may be arranged immediately adjacent to the light source side of the reflection hologram 2 (adjacent to the right side in the drawing). Thus, since the extraneous light from the light source side of the image reproduction device 100b is occluded, the quality of the reproduced image 11 reproduced by the reflection hologram 2 is improved.

Note that the reproduction light source 1b may emit the reproduction illumination light 10 which is left circularly-polarized light instead the reproduction illumination light 10 which is right circularly-polarized light. In this case, the quarter-wave plate 5 which changes the polarization state of the light passing therethrough so that the columns "prior to transmission" and "after transmission" in the above table are reversed is used.

In FIG. 2, since the reproduction illumination light 10 emitted from the reproduction light source 1b is right circularly-polarized light, when transmitted through the quarter-wave plate 5, it becomes linearly-polarized light the polarization plane of which is along the first axial direction. Thereafter, the reproduction illumination light 10 is partially reflected by the beam splitting element 3. The reproduction illumination light 10 reflected by the beam splitting element 3 is transmitted again through the quarter-wave plate 5 so that the polarization state becomes left circularly-polarized light.

Thereafter, the front side of the reflection hologram 2 is irradiated with the reproduction illumination light 10. As a result, the reproduced image 11 is reproduced on the front side of the reflection hologram 2. Since the light 12 of the reproduced image 11 is left circularly-polarized light, when transmitted through the quarter-wave plate 5, it becomes linearly-polarized light the polarization plane of which is oriented along the second axial direction. Thus, a part of the light 12 of the reproduced image 11 passes through the beam splitting element 3 and the polarization plate 4 and is observed by the observer 6.

Conversely, the reproduction illumination light 10 from the reproduction light source 1b transmitted through the beam splitting element 3 without being reflected by the beam splitting element 3 is absorbed by the polarization plate 4 because the polarization plane is linearly-polarized along the first axial direction. Thus, in the configuration shown in FIG. 2, the direct light of the reproduction light source 1b is not observed by the observer 6. Thus, glare of the direct light of the reproduction light source 1b is suppressed when observed by the observer 6 from the front side of the reflection hologram 2.

Next, in FIG. 2, the external light 70 from the sun or a fluorescent lamp, when transmitted through the polarization plate 4, becomes linearly-polarized light the polarization plane of which is oriented along the second axial direction. Thereafter, the external light 70 is partially reflected by the beam splitting element 3 and transmitted again through the polarization plate 4.

The amount of the reflected external light 70 observed by the observer 6, when transmitted through the polarization plate 4, is reduced to approximately one-half.

Conversely, since the external light 70 transmitted through the beam splitting element 3 without being reflected by the beam splitting element 3 is linearly-polarized light along the second axial direction, when transmitted through the quarter-wave plate 5, the polarization state thereof becomes right circularly-polarized light.

Thereafter, the front side of the reflection hologram 2 is irradiated with the external light 70. As a result, a ghost image 71 is reproduced on the front side of the reflection hologram 2. Since the light 72 of the reproduced ghost image 71 is right circularly-polarized light, when transmitted through the quarter-wave plate 5, it becomes linearly-polarized light the polarization plane of which is oriented along the first axial direction. Thereafter, the light 72 of the ghost image 71 passes through the beam splitting element 3 and is absorbed by the polarization plate 4 because it is linearly-polarized light along the first axial direction.

Thus, in the configuration shown in FIG. 2, the light 72 of the ghost image 71 reproduced by the external light 70 is not observed by the observer 6. Thus, observation by the observer 6 of the ghost image 71 produced by the external light 70 overlapping the reproduced image 11 produced by the reproduction illumination light 10 is suppressed.

As described above, the image reproduction device of the present embodiment comprises a quarter-wave plate arranged between the reflection hologram and the beam splitting element. Furthermore, the image reproduction device of the present embodiment comprises a polarization plate which is arranged on the side of the beam splitting element opposite the reflection hologram and which absorbs a polarization component of light transmitted along the first axial direction. Furthermore, the reproduction light source of the present embodiment emits the reproduction illumination light so that the reproduction illumination light transmitted through the quarter-wave plate becomes linearly-polarized light along the first axial direction.

According to such a configuration, the glare of direct light from the reproduction light source is suppressed, and the glare of reflected external light is reduced. Furthermore, the occurrence of a ghost image is suppressed.

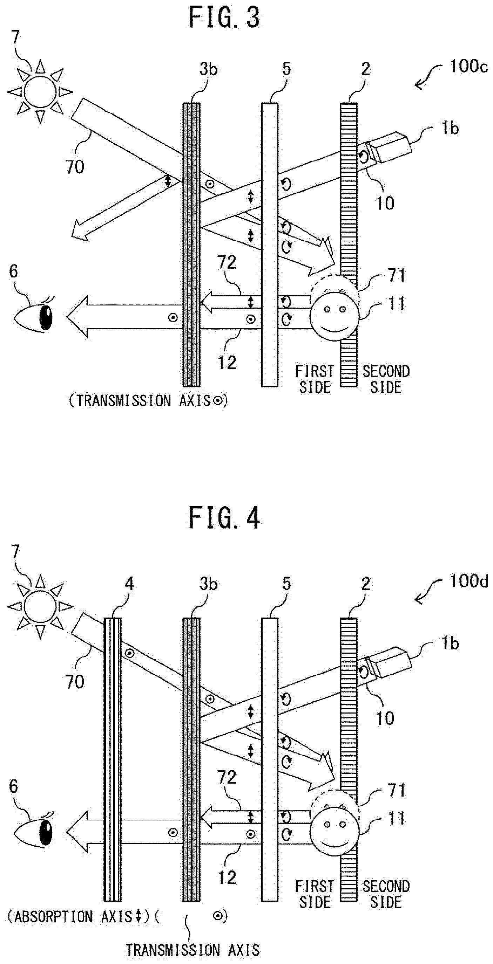

[Third Embodiment] FIG. 3 is a diagram schematically illustrating the configuration of an image reproduction device 100c according to a third embodiment. The image reproduction device 100c of the present embodiment comprises a beam splitting element 3b, which is a polarizing beam splitter, instead of the beam splitting element 3 and the polarization plate 4 of the second embodiment shown in FIG. 2. The other structures of the image reproduction device 100c are the same as those of the second embodiment, and thus, the points which differ from those of the second embodiment will be described below.

The beam splitting element 3b reflects the polarization component along the first axial direction of the irradiated light and transmits the polarization component along the second axial direction. The polarization axial direction parallel to the light absorption axis of the polarization plate 4 of the second embodiment shown in FIG. 2 is defined as the first axial direction, and the polarization axial direction perpendicular to the light absorption axis of the polarization plate 4 is defined as the second axial direction. As the beam splitting element 3b, for example, a polarizing beam splitter in which a large number of metallic wires are arranged on a plane along the first axial direction is used.

In FIG. 3, since the reproduction illumination light 10 emitted from the reproduction light source 1b is right circularly-polarized light, when transmitted through the quarter-wave plate 5, it becomes linearly-polarized light the polarization plane of which is along the first axial direction. Thereafter, the reproduction illumination light 10 is reflected by the beam splitting element 3b since it is linearly-polarized light along the first axial direction. The reproduction illumination light 10 reflected by the beam splitting element 3b passes through the quarter-wave plate 5 again to become left circularly-polarized light.

Thereafter, the front side of the reflection hologram 2 is irradiated with the reproduction illumination light 10. As a result, the reproduced image 11 is reproduced on the front side of the reflection hologram 2. Since the light 12 of the reproduced image 11 is left circularly-polarized light, when transmitted through the quarter-wave plate 5, it becomes linearly-polarized light the polarization plane of which is oriented along the second axial direction. Thus, the light 12 of the reproduced image 11 passes through the beam splitting element 3b because it is linearly-polarized light along the second axial direction, and is observed by the observer 6.

In the configuration shown in FIG. 3, until the reproduction illumination light 10 emitted from the reproduction light source 1b is observed by the observer 6 as the reproduced image 11, in principle, the amount of light is not reduced in the beam splitting element 3b, the polarization plate 4, and the quarter-wave plate 5. Thus, the reproduced image 11 is brightly reproduced.

Conversely, the reproduction illumination light 10 from the reproduction light source 1b transmitted through the quarter-wave plate 5 does not transmit through the beam splitting element 3b because it is linearly-polarized light along the first axial direction. Thus, in the configuration shown in FIG. 3, the direct light of the reproduction light source 1b is not observed by the observer 6. Thus, glare of the direct light of the reproduction light source 1b when viewed from the front side of the reflection hologram 2 by the observer 6 is suppressed.

Next, in FIG. 3, the polarization component of the external light 70 from the sun or a fluorescent lamp along the first axial direction is reflected by the beam splitting element 3b. The reflected external light 70 observed by the observer 6 is reduced to approximately one-half when reflected by the beam splitting element 3b. Thus, in the configuration shown in FIG. 3, the glare of the reflected external light 70 when viewed by the observer 6 from the front side of the reflection hologram 2 is reduced.

Conversely, since the external light 70 transmitted through the beam splitting element 3b without being reflected by the beam splitting element 3b is linearly-polarized light along the second axial direction, when transmitted through the quarter-wave plate 5, the polarization state becomes right circularly-polarized light.

Thereafter, the front side of the reflection hologram 2 is irradiated with the external light 70. As a result, the ghost image 71 is reproduced on the front side of the reflection hologram 2. Since the light 72 of the reproduced ghost image 71 is right circularly-polarized light, when transmitted through the quarter-wave plate 5, it becomes linearly-polarized light the polarization plane of which is oriented along the first axial direction. Thereafter, the light 72 of the ghost image 71 is reflected by the beam splitting element 3b because it is linearly-polarized light along the first axial direction.

Thus, in the configuration shown in FIG. 3, the light 72 of the ghost image 71 reproduced by the external light 70 is not observed by the observer 6. Thus, observation by the observer 6 of the ghost image 71 produced by the external light 70 overlapping the reproduced image 11 produced by the reproduction illumination light 10 is suppressed.

As described above, the beam splitting element of the present embodiment is a polarizing beam splitter which reflects the polarization component of the irradiated light along the first axial direction and transmits the polarization component along the second axial direction orthogonal to the first axial direction. Furthermore, the beam splitting element of the present embodiment is used as a pair with the quarter-wave plate and functions as an optical isolator which suppresses reflection due to external light.

According to such a configuration, in addition to the effects brought about by the structures of the second embodiment, the image is reproduced brightly.

[Fourth Embodiment] FIG. 4 is a diagram schematically illustrating the configuration of an image reproduction device 100d according to a fourth embodiment. The image reproduction device 100d of the present embodiment further comprises a polarization plate 4 in addition to the structures of the third embodiment shown in FIG. 3. Since the other structures of the image reproduction device 100d are the same as those of the third embodiment, the points which differ from those of the third embodiment will be described below.

The polarization plate 4 is the same as the polarization plate 4 of the second embodiment shown in FIG. 2, is arranged on the side of the beam splitting element 3b opposite the reflection hologram 2, and among the light passing through the polarization plate 4, absorbs the polarization component along the first axial direction, and transmits the polarization component along the second axial direction.

In FIG. 4, the external light 70 from the sun or a fluorescent lamp, when transmitted through the polarization plate 4, becomes linearly-polarized light the polarization plane of which is oriented along the second axial direction. Thereafter, since the external light 70 is linearly-polarized light along the second axial direction, it passes through the beam splitting element 3b without being reflected by the beam splitting element 3b. Thus, in the configuration shown in FIG. 4, the reflected external light 70 is not observed by the observer 6. Thus, glare of the reflected external light 70 is suppressed.

As described above, in addition to the structures of the third embodiment, the beam splitting element of the present embodiment further comprises a polarization plate which is arranged on the side of the beam splitting element opposite the reflection hologram and which absorbs the polarization component of the transmitted light along the first axial direction.

According to such a configuration, in addition to the effects brought about by the structures of the third embodiment, glare of the reflected external light is suppressed.

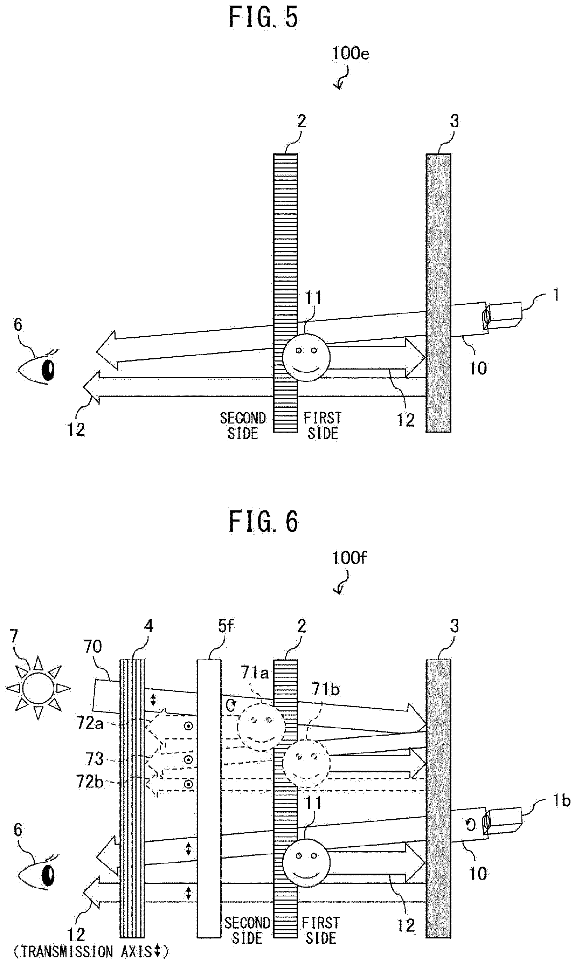

[Fifth Embodiment] FIG. 5 is a diagram schematically illustrating the configuration of an image reproduction device 100e according to a fifth embodiment. The image reproduction device 100e of the present embodiment has a configuration in which the arrangement of the reflection hologram 2 and the beam splitting element 3 of the image reproduction device 100 according to the first embodiment shown in FIG. 1 is interchanged, and further, the front and back sides of the reflection hologram 2 are reversed.

The reproduction light source 1 is arranged on the first side (the right side in FIG. 5), which is the front side of the reflection hologram 2 on which the reproduced image 11 is reproduced, and the reflection hologram 2 is irradiated with the reproduction illumination light 10 via the beam splitting element 3. The reproduction illumination light 10 can be, for example, a laser light source having the same wavelength component as the recording light when the object image is recorded on the reflection hologram 2. Alternatively, the reproduction illumination light 10 may be an LED or a light bulb having the same wavelength component as the recording light. Furthermore, the reproduction light source 1 of the present embodiment may emit linearly-polarized or circularly-polarized reproduction illumination light 10, or may emit non-polarized (i.e., randomly polarized) reproduction illumination light 10.

The reflection hologram 2 reflects the reproduction illumination light 10 irradiated thereon from the first side, and the reproduced image 11 is reproduced on the first side. The reflection hologram 2 is, for example, a Lippman hologram.

The beam splitting element 3 is arranged on the first side of the reflection hologram 2, and transmits a part or all of the reproduction illumination light 10 emitted from the reproduction light source 1 onto the reflection hologram 2. Further, the beam splitting element 3 reflects a part or all of the light 12 of the reproduced image 11 reproduced by the reflection hologram 2 toward the reflection hologram 2. The beam splitting element 3 is a beam splitter such as a half mirror or the like which reflects a part and transmits a part of the light incident thereon.

The observer 6 can observe the light 12 of the reproduced image 11 reflected by the beam splitting element 3 from the second side (the left side in FIG. 5) of the reflection hologram 2, which is the side opposite the first side.

The mechanism by which the reproduced image 11 generated by irradiation of the reflection hologram 2 with the reproduction illumination light 10 is observed by the observer 6 will be described below.

In FIG. 5, a part of the reproduction illumination light 10 emitted from the reproduction light source 1 passes through the beam splitting element 3 and irradiates the reflection hologram 2 from the first side. As a result, the reproduced image 11 is reproduced on the first side of the reflection hologram 2.

A part of the light 12 of the reproduced image 11 reproduced by the reflection hologram 2 is reflected by the beam splitting element 3 and passes through the reflection hologram 2. As a result, the reproduced image 11 is formed on the second side of the reflection hologram 2 and is observed by the observer 6.

As described above, the image reproduction device of the present embodiment comprises a reflection hologram which reflects the reproduction illumination light emitted from the first side and which reproduces the reproduced image on the first side thereof, and a beam splitting element arranged on the first side of the reflection hologram. The beam splitting element transmits a part or all of the reproduction illumination light toward the reflection hologram, and reflects a part or all of the light of the reproduced image reproduced by the reflection hologram toward the reflection hologram.

As a result, in the image reproduction device of the present embodiment, a special holographic optical element or a planar mirror is not used, and the reproduction light source can be arranged on the side opposite the side on which the reproduced image is observed. Thus, in the image reproduction device of the present embodiment, the size of the device can be reduced, and a wide visual range can be obtained without hindering the visual recognition of the reproduced image.

Note that, though the reflection hologram and the beam splitting element are separated from each other by a space for the sake of convenience in FIG. 5, it is preferable the reflection hologram and the beam splitting element be arranged so as to overlap each other. Thus, the size of the image reproduction device is further reduced. Further, since the edge of the reflection hologram or the beam splitting element does not overlap the light of the reproduced image regardless of the direction of observation, when the observer observes the reproduced image, discontinuous reproduction of the reproduced image at the edge is prevented.

[Sixth Embodiment] FIG. 6 is a diagram schematically illustrating the configuration of an image reproduction device 100f according to a sixth embodiment. The image reproduction device 100f of the present embodiment further comprises a polarization plate 4 and a quarter-wave plate 5f in addition to the structures of the image reproduction device 100e of the fifth embodiment shown in FIG. 5. Furthermore, the reproduction light source 1b of the present embodiment emits circularly-polarized reproduction illumination light 10. The other structures of the image reproduction device 100f are the same as those of the fifth embodiment, and thus, the points which differ from those of the fifth embodiment will be described below.

The polarization plate 4 and the quarter-wave plate 5f are used in combination and function as an optical isolator which suppresses external light reflection by the external light 70 from the external light source 7, such as the sun or a fluorescent lamp, on the second side of the reflection hologram 2. The function of the polarization plate 4 and the quarter-wave plate 5f as the optical isolator is maximized when the fast axis and the slow axis of the quarter-wave plate 5f, which are perpendicular to each other, are inclined by 45° with respect to the optical transmission axis of the polarization plate 4, but the present embodiment is not limited thereto. The fast axis or the slow axis of the quarter-wave plate 5f may be inclined at an angle of 0° to 90° with respect to the optical transmission axis of the polarization plate 4.

The polarization plate 4 is arranged on the second side of the reflection hologram 2. The polarization plate 4 has an optical transmission axis in the first axial direction, transmits the polarization component of the light incident thereon in the first axial direction, but does not allow transmission of the polarization component in the second axial direction orthogonal to the first axial direction by absorbing or reflecting the same. As such a polarization plate 4, for example, a polarization plate in which an iodine compound or a two-color organic dye is adsorbed and oriented on a polyvinyl alcohol (PVA) film or the like is used.

The quarter-wave plate 5f is arranged between the reflection hologram 2 and the polarization plate 4. The quarter-wave plate 5f imparts a phase difference corresponding to a quarter-wavelength between the polarization component in the fast axial direction and the polarization component in the slow axial direction of the light transmitted through the quarter-wave plate 5f. Thus, the quarter-wave plate 5f changes the polarization state of the light transmitted through the quarter-wave plate 5f, for example, as shown in the above table shown in the second embodiment. The first axial direction is a polarization axial direction parallel to the optical transmission axis of the polarization plate 4, and the second axial direction is a polarization axial direction perpendicular to the optical transmission axis of the polarization plate 4.

It is preferable that the quarter-wave plate 5f have a broadband property which imparts a phase difference corresponding to a wavelength of approximately one-fourth to transmitted light in the visible light range of 400 to 700 nm. Furthermore, the quarter-wave plate 5f preferably has a low angular dependence on incident light in the visible light range of 400 to 700 nm.

The reproduction light source 1b emits the right circularly-polarized reproduction illumination light 10 so as to be, for example, linearly-polarized light parallel to the first axial direction when transmitted once through the quarter-wave plate 5f. The reproduction light source 1b which emits such right circularly-polarized reproduction illumination light 10 is composed of a combination of, for example, a laser light source for outputting linearly-polarized light which is parallel to the second axial direction, and a quarter-wave plate which changes the polarization state of the light as shown in the table above.

The light source for outputting linearly-polarized light, in addition to the use of a laser light source, can be constituted by a combination of a light source such as an LED or a light bulb for emitting non-polarized light, and a polarization plate. For example, a light source for outputting linearly-polarized light parallel to the first axial direction is configured by a combination of a light source for emitting non-polarized light and a polarization plate having an optical transmission axis in the first axial direction. Furthermore, a light source for outputting linearly-polarized light parallel to the second axial direction is configured by a combination of a light source for emitting non-polarized light and a polarization plate having an optical transmission axis in the second axial direction.

Thus, the reproduction light source 1b for emitting the reproduction illumination light 10 which is right circularly-polarized light, can be constituted by arranging, in this order, a light source for emitting non-polarized light, a polarization plate having an optical transmission axis in the second axial direction, and a quarter-wave plate for changing the polarization state as shown in the above table. In this case, the polarization plate having an optical transmission axis in the second axial direction and the quarter-wave plate for changing the polarization state as shown in the above table may be configured separately from the light source for emitting non-polarized light and arranged directly next to the light source side of the beam splitting element 3 (next to the right in the drawing). As a result, extraneous light from the light source side of the image reproduction device 100f is occluded, whereby the quality of the reproduced image 11 reproduced by the reflection hologram 2 is improved.

Note that the reproduction light source 1b may emit reproduction illumination light 10 which is left circularly-polarized light instead of emitting reproduction illumination light 10 which is right circularly-polarized light. In this case, the quarter-wave plate 5f in which the polarization state of the transmitted light is changed so that the prior to and after transmission columns in the above table are reversed is used.

First, the mechanism by which the reproduced image 11 generated by irradiation of the reflection hologram 2 with the reproduction illumination light 10 is observed by the observer 6 will be described.

In FIG. 6, the reproduction light source 1b emits the reproduction illumination light 10 of, for example, right circularly-polarized light which becomes linearly-polarized light parallel to the first axial direction when transmitted once through the quarter-wave plate 5f. The reproduction illumination light 10 is emitted in the same direction as the recording light used when the object image has been recorded on the reflection hologram 2.

The reproduction illumination light 10 emitted from the reproduction light source 1b, a part of which passes through the beam splitting element 3, is emitted from the first side toward the reflection hologram 2. As a result, the reproduced image 11 is reproduced on the first side of the reflection hologram 2.

The light 12 of the reproduced image 11 reproduced by the reflection hologram 2, a part of which is reflected by the beam splitting element 3, passes through the reflection hologram 2 and forms the reproduced image 11 on the second side of the reflection hologram 2. The light 12 of the reproduced image 11 transmitted through the reflection hologram 2 is right circularly-polarized light, and thus, when transmitted through the quarter-wave plate 5f, becomes linearly-polarized light the polarization plane of which is parallel to the first axial direction. Thus, the light 12 of the reproduced image 11 transmitted through the quarter-wave plate 5f passes through the polarization plate 4. As a result, the reproduced image 11 is observed by the observer 6

Next, the effects of ghost images 71a and 71b caused by the external light 70 irradiated from the external light source 7 such as the sun or a fluorescent lamp will be described.

In FIG. 6, the external light 70 from the external light source 7, when transmitted through the polarization plate 4, becomes linearly-polarized light the polarization plane of which is parallel to the first axial direction. The external light 70 transmitted through the polarization plate 4 is linearly-polarized light the polarization plane of which is parallel to the first axial direction, and thus, when transmitted through the quarter-wave plate 5f, becomes left circularly-polarized light.

The external light 70 transmitted through the quarter-wave plate 5f is emitted from the second side toward the reflection hologram 2. As a result, the ghost image 71a is reproduced on the second side of the reflection hologram 2. This ghost image 71a is a conjugated image generated by light emitted from the second side, which is the back side of the reflection hologram 2, and thus, the image becomes an inverted so-called pseudoscopic image. The ghost image 71a is particularly likely to occur when the external light 70 is emitted from the direction opposite to the recording light used when the object image has been recorded on the reflection hologram 2.

The light 72a of the ghost image 71a reproduced by the reflection hologram 2 is left circularly-polarized light, and thus, when transmitted through the quarter-wave plate 5f, becomes linearly-polarized light the polarization plane of which is parallel to the second axial direction. Thus, the light 72a of the ghost image 71a transmitted through the quarter-wave plate 5f is absorbed or reflected by the polarization plate 4 and is not observed by the observer 6.

Furthermore, in FIG. 6, the external light 70 transmitted through the reflection hologram 2 is reflected by the beam splitting element 3 and is emitted from the first side toward the reflection hologram 2. As a result, the ghost image 71b is reproduced on the first side of the reflection hologram 2.

The light 72b of the ghost image 71b reproduced by the reflection hologram 2 is reflected by the beam splitting element 3, and passes through the reflection hologram 2. The light 72b of the ghost image 71b transmitted through the reflection hologram 2 is left circularly-polarized light, and thus, when transmitted through the quarter-wave plate 5f, becomes linearly-polarized light the polarization plane of which is parallel to the second axial direction. Thus, the light 72b of the ghost image 71b transmitted through the quarter-wave plate 5f is absorbed or reflected by the polarization plate 4 and is not observed by the observer 6.

As described above, in the image reproduction device 100f of the present embodiment, since neither of the light 72a and the light 72b of the ghost images 71a and 71b generated by the external light 70 pass through the polarization plate 4, a sharp reproduced image 11 is observed by the observer 6 without the ghost images 71a and 71b.

Note that the light 72b of the ghost image 71b reproduced by the reflection hologram 2 is reflected by the beam splitting element 3, and is further emitted toward the reflection hologram 2, whereby a high-order ghost image 71b is reproduced in some cases. Since such a high-order ghost image 71b has a small amount of light, the effect thereof can be practically disregarded.

Next, the influence of the reflected light 73 of the external light 70 emitted from the external light source 7 will be described.

In FIG. 6, the reflected light 73 of the external light 70 which has been reflected by the beam splitting element 3 and which has passed through the reflection hologram 2 and the quarter-wave plate 5f is linearly-polarized light the polarization plane of which is parallel to the second axial direction, and thus, is absorbed or reflected by the polarization plate 4 and is not observed by the observer 6.

As described above, in the image reproduction device 100f of the present embodiment, since the reflected light 73 of the external light 70 does not pass through the polarization plate 4, a reproduced image 11 in which glare of the reflected light 73 of the external light 70 is suppressed is observed by the observer 6.

As described above, the image reproduction device of the present embodiment comprises a polarization plate which is arranged on the second side opposite to the first side of the reflection hologram, which transmits the polarization component of the light incident thereon in the first axial direction, and which does not transmit the polarization component in the second axial direction orthogonal to the first axial direction. The image reproduction device further comprises a quarter-wave plate arranged between the reflection hologram and the polarization plate. Further, the beam splitting element reflects a part and transmits a part of the light incident thereon, and the reproduction light source emits the reproduction illumination light of circularly-polarized light which becomes linearly-polarized light parallel to the first axial direction when transmitted once through the quarter-wave plate.

Thus, in addition to the effects of the fifth embodiment, the image reproduction device of the present embodiment can suppress the influence of ghost images caused by external light and glare of the external reflected light.

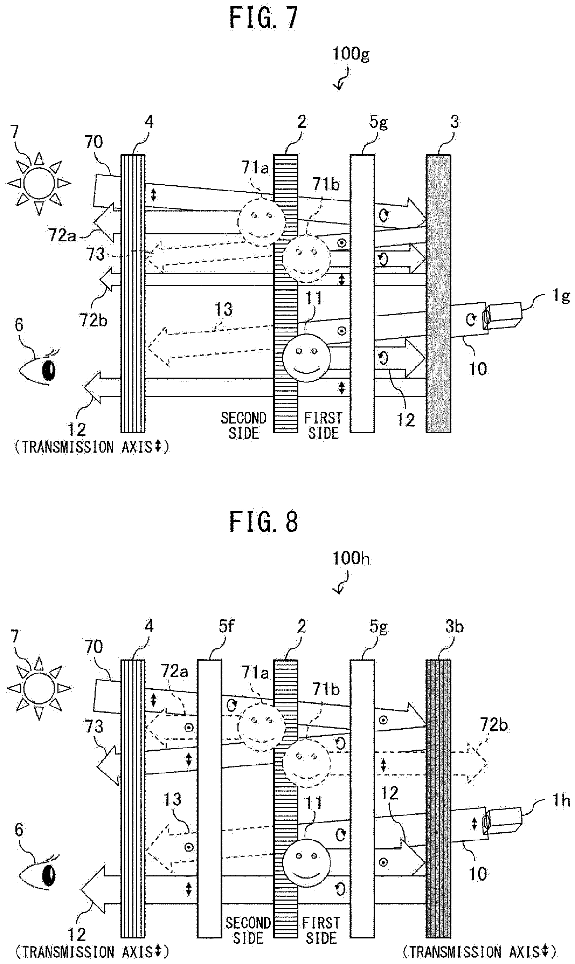

[Seventh Embodiment] FIG. 7 is a diagram schematically illustrating the configuration of an image reproduction device 100g according to a seventh embodiment. The image reproduction device 100g of the present embodiment differs from the configuration of the sixth embodiment shown in FIG. 6 in that instead of the quarter-wave plate 5f, a quarter-wave plate 5g is arranged between the reflection hologram 2 and the beam splitting element 3. The reproduction light source 1g of the present embodiment emits the reproduction illumination light 10 of circularly-polarized light in a direction opposite to the reproduction light source 1b of the sixth embodiment. Since the other structures of the image reproduction device 100g are the same as those of the sixth embodiment, the points which differ from those of the sixth embodiment will be described below.

The quarter-wave plate 5g is arranged between the reflection hologram 2 and the beam splitting element 3. The quarter-wave plate 5g is the same as the quarter-wave plate 5f of the sixth embodiment shown in FIG. 6, and changes the polarization state of the light transmitted through the quarter-wave plate 5g, for example, as shown in the above-mentioned table in the second embodiment.

The reproduction light source 1g emits the reproduction illumination light 10 of left circularly-polarized light which becomes, for example, linearly-polarized light parallel to the second axial direction when transmitted once through the quarter-wave plate 5g. The reproduction light source 1g for emitting the reproduction illumination light 10 of left circularly-polarized light is constituted by a combination of, for example, a laser light source for outputting linearly-polarized light parallel to the first axial direction and a quarter-wave plate for changing the polarization state of the light as shown in the table above.

Alternatively, the reproduction light source 1g for emitting the reproduction illumination light 10 which is left circularly-polarized light can be constituted by arranging, in this order, a light source for emitting non-polarized light, a polarization plate having an optical transmission axis in the first axial direction, and a quarter-wave plate for changing the polarization state as shown in the above table. In this case, the polarization plate having an optical transmission axis in the first axial direction and the quarter-wave plate for changing the polarization state as shown in the above table may be configured separately from the light source for emitting non-polarized light and arranged directly next to the light source side of the beam splitting element 3 (next to the right in the drawing). As a result, extraneous light from the light source side of the image reproduction device 100g is occluded, whereby the quality of the reproduced image 11 reproduced by the reflection hologram 2 is improved.

Note that, instead of emitting the reproduction illumination light 10 which is left circularly-polarized light, the reproduction light source 1g may emit the reproduction illumination light 10 which is right circularly-polarized light. In this case, a quarter-wave plate 5g in which the polarization state of the transmitted light is changed so that the prior to and after transmission columns in the above table are reversed is used.

First, the mechanism by which the reproduced image 11 generated by irradiation of the reflection hologram 2 with the reproduction illumination light 10 is observed by the observer 6 will be described.

In FIG. 7, the reproduction light source 1g emits the reproduction illumination light 10 of, for example, left circularly-polarized light which becomes linearly-polarized light parallel to the second axial direction when transmitted once through the quarter-wave plate 5g. The reproduction illumination light 10 is emitted from the same direction as the recording light used when the object image has been recorded on the reflection hologram 2.

A part of the reproduction illumination light 10 emitted from the reproduction light source 1g passes through the beam splitting element 3. The reproduction illumination light 10 transmitted through the beam splitting element 3 is left circularly-polarized light, and thus, when transmitted through the quarter-wave plate 5g, becomes linearly-polarized light the polarization plane of which is parallel to the second axial direction.

The reproduction illumination light 10 transmitted through the quarter-wave plate 5g is emitted from the first side toward the reflection hologram 2. As a result, the reproduced image 11 is reproduced on the first side of the reflection hologram 2.

The light 12 of the reproduced image 11 reproduced by the reflection hologram 2 is linearly-polarized light the polarization plane of which is parallel to the second axial direction, and thus, when transmitted through the quarter-wave plate 5g, becomes right circularly-polarized light. The light 12 of the reproduced image 11 which passes through the quarter-wave plate 5g and is partly reflected by the beam splitting element 3 is right circularly-polarized light, and thus, when transmitted through the quarter-wave plate 5g, becomes linearly-polarized light the polarization plane of which is parallel to the first axial direction. The light 12 of the reproduced image 11 which has passed through the quarter-wave plate 5g passes through the reflection hologram 2 to form a reproduced image 11 on the second side of the reflection hologram 2. The light 12 of the reproduced image 11 which has passed through the reflection hologram 2 is linearly-polarized light the polarization plane of which is parallel to the first axial direction, and thus, passes through the polarization plate 4. As a result, the reproduced image 11 is observed by the observer 6.

Next, the effect of the direct light 13 of the reproduction illumination light 10 emitted from the reproduction light source 1g will be described.

In FIG. 7, the direct light 13 of the reproduction illumination light 10 which has passed through the reflection hologram 2 is linearly-polarized light the polarization plane of which is parallel to the second axial direction, and thus, is absorbed or reflected by the polarization plate 4 and is not observed by the observer 6.

As described above, in the image reproduction device 100g of the present embodiment, since the direct light 13 of the reproduction illumination light 10 emitted from the reproduction light source 1g does not pass through the polarization plate 4, a reproduced image 11 in which the glare of the direct light 13 of the reproduction illumination light 10 is suppressed is observed by the observer 6.

Next, the effects of the ghost images 71a and 71b caused by the external light 70 emitted from the external light source 7 such as the sun or a fluorescent lamp will be described.

In FIG. 7, the external light 70 from the external light source 7, when passing through the polarization plate 4, becomes linearly-polarized light the polarization plane of which is parallel to the first axial direction.

The reflection hologram 2 is irradiated from the second side with external light 70 which has passed through the polarization plate 4. As a result, the ghost image 71a is reproduced on the second side of the reflection hologram 2.

The light 72a of the ghost image 71a reproduced by the reflection hologram 2 is linearly-polarized light the polarization plane of which is parallel to the first axial direction, and thus, is transmitted through the polarization plate 4 and observed by the observer 6. However, since the light amount of the light 72a of the ghost image 71a observed by the observer 6 is reduced to approximately one-half when the external light 70 first passes through the polarization plate 4, the influence of the ghost image 71a is reduced.

Further, in FIG. 7, the external light 70 transmitted through the reflection hologram 2 is linearly-polarized light the polarization plane of which is parallel to the first axial direction, and thus, when transmitted through the quarter-wave plate 5g, becomes left circularly-polarized light. The part of the external light 70 which has passed through the quarter-wave plate 5g and has been reflected by the beam splitting element 3 is left circularly-polarized light, and thus, when transmitted again through the quarter-wave plate 5g, becomes linearly-polarized light the polarization plane of which is parallel to the second axial direction.

The external light 70 transmitted again through the quarter-wave plate 5g is emitted toward the reflection hologram 2 from the first side. As a result, the ghost image 71b is reproduced on the first side of the reflection hologram 2.

The light 72b of the ghost image 71b reproduced by the reflection hologram 2 is linearly-polarized light the polarization plane of which is parallel to the second axial direction, and thus, when transmitted through the quarter-wave plate 5g, becomes right circularly-polarized light. The light 72b of the ghost image 71b which has passed through the quarter-wave plate 5g and has been partly reflected by the beam splitting element 3 is right circularly-polarized light, and thus, when transmitted again through the quarter-wave plate 5g, becomes linearly-polarized light the polarization plane of which is parallel to the first axial direction. Thus, the light 72b of the ghost image 71b which has passed through the quarter-wave plate 5g and the reflection hologram 2 passes through the polarization plate 4 and is observed by the observer 6. However, since the amount of light 72b of the ghost image 71b observed by the observer 6 is reduced to approximately one-half each time the external light 70 passes through the polarization plate 4 or is reflected by the beam splitting element 3, the effect of the ghost image 71b is reduced.

Next, the influence of the reflected light 73 of the external light 70 emitted from the external light source 7 will be described.

In FIG. 7, the reflected light 73 of the external light 70 which has been reflected by the beam splitting element 3 and which has passed through the quarter-wave plate 5g and the reflection hologram 2 is linearly-polarized light the polarization plane of which is parallel to the second axial direction, and thus, is absorbed or reflected by the polarization plate 4 and is not observed by the observer 6.

As described above, in the image reproduction device 100g of the present embodiment, since the reflected light 73 of the external light 70 does not pass through the polarization plate 4, a reproduced image 11 in which the glare of the reflected light 73 of the external light 70 is suppressed is observed by the observer 6.

As described above, the image reproduction device of the present embodiment further comprises a polarization plate which is arranged on the second side of the reflection hologram opposite the first side, transmits the polarization component of the light incident thereon in the first axial direction, and does not transmit the polarization component in the second axial direction orthogonal to the first axial direction. The image reproduction device further comprises a quarter-wave plate arranged between the reflection hologram and the beam splitting element. Furthermore, the beam splitting element transmits a part and reflects a part of the light incident thereon, and the reproduction light source emits the reproduction illumination light of circularly-polarized light which becomes linearly-polarized light parallel to the second axial direction when transmitted once through the quarter-wave plate.

Thus, the image reproduction device of the present embodiment, in addition to the effects of the fifth embodiment, can reduce the influence of ghost images caused by external light and can suppress glare caused by direct light from the reproduction light source and external light reflection.

[Eighth Embodiment] FIG. 8 is a diagram schematically illustrating the configuration of an image reproduction device 100h according to an eighth embodiment. The image reproduction device 100h of the present embodiment differs from the configurations of the sixth embodiment and the seventh embodiment in that it includes both the quarter-wave plate 5f shown in FIG. 6 and the quarter-wave plate 5g shown in FIG. 7. The reproduction light source 1h of the present embodiment emits the reproduction illumination light 10 of linearly-polarized light parallel to the first axial direction, which is the direction of the optical transmission axis of the polarization plate 4.

Furthermore, the beam splitting element 3b of the present embodiment has an optical transmission axis in the same first axial direction as the optical transmission axis of the polarization plate 4, transmits the polarization component of the light incident thereon in the first axial direction, and reflects the polarization component orthogonal to the first axial direction. As such a beam splitting element 3b, for example, a polarizing beam splitter in which metal wires extending in the second axial direction orthogonal to the first axial direction are arranged on a plane at intervals shorter than the wavelength of the reproduction illumination light 10 emitted from the reproduction light source 1h is used.

Since the other structures of the image reproduction device 100h are the same as those of the sixth embodiment and the seventh embodiment, the points which differ from those of the sixth embodiment and the seventh embodiment will be described below.

First, the mechanism by which the reproduced image 11 generated by irradiation of the reflection hologram 2 with the reproduction illumination light 10 is observed by the observer 6 will be described.

In FIG. 8, the reproduction light source 1h emits the reproduction illumination light 10 of linearly-polarized light parallel to the first axial direction. The reproduction illumination light 10 is irradiated from the same direction as the recording light used when the object image has been recorded on the reflection hologram 2.

The reproduction illumination light 10 emitted from the reproduction light source 1h is linearly-polarized light the polarization plane of which is parallel to the first axial direction, and thus, passes through the beam splitting element 3b. The reproduction illumination light 10 which has passed through the beam splitting element 3b is linearly-polarized light the polarization plane of which is parallel to the first axial direction, and thus, when transmitted through the quarter-wave plate 5g, becomes left circularly-polarized light.

The reproduction illumination light 10 which has passed through the quarter-wave plate 5g is emitted from the first side toward the reflection hologram 2. As a result, the reproduced image 11 is reproduced on the first side of the reflection hologram 2.

The light 12 of the reproduced image 11 reproduced by the reflection hologram 2 is left circularly-polarized light, and thus, when transmitted through the quarter-wave plate 5g, becomes linearly-polarized light the polarization plane of which is parallel to the second axial direction. Thus, the light 12 of the reproduced image 11 which has passed through the quarter-wave plate 5g is reflected by the beam splitting element 3b. The light 12 of the reproduced image 11 reflected by the beam splitting element 3b is linearly-polarized light the polarization plane of which is parallel to the second axial direction, and thus, when transmitted through the quarter-wave plate 5g, becomes right circularly-polarized light. The light 12 of the reproduced image 11 which has passed through the quarter-wave plate 5g passes through the reflection hologram 2 and forms the reproduced image 11 on the second side of the reflection hologram 2. The light 12 of the reproduced image 11 which has passed through the reflection hologram 2 is right circularly-polarized light, and thus, when transmitted through the quarter-wave plate 5f, becomes linearly-polarized light the polarization plane of which is parallel to the first axial direction. Thus, the light 12 of the reproduced image 11 which has passed through the quarter-wave plate 5f passes through the polarization plate 4. As a result, the reproduced image 11 is observed by the observer 6.

Thus, in the configuration of the present embodiment, until the reproduction illumination light 10 emitted by the reproduction light source 1h is observed by the observer 6 as the light 12 of the reproduced image 11, in principle, the amount of light of the reproduction illumination light 10 is not reduced except that the direct light 13 passes through the reflection hologram 2. Conversely, in the configuration of the fifth to seventh embodiments, for example, when the beam splitting element 3 is a half mirror having a transmittance of 50% and a reflectance of 50%, the amount of light of the reproduction illumination light 10 is reduced to one-half each time the light passes through or is reflected by the beam splitting element 3. Thus, in the image reproduction device 100h of the present embodiment, a reproduced image 11 which is bright as compared with the configuration of the fifth to seventh embodiments is observed by the observer 6.

Next, the effect of the direct light 13 of the reproduction illumination light 10 emitted from the reproduction light source 1h will be described.

In FIG. 8, the direct light 13 of the reproduction illumination light 10 which has passed through the reflection hologram 2 is left circularly-polarized light, and thus, when transmitted through the quarter-wave plate 5f, becomes linearly-polarized light the polarization plane of which is parallel to the second axial direction. Thus, the direct light 13 of the reproduction illumination light 10 which has passed through the quarter-wave plate 5f is absorbed or reflected by the polarization plate 4 and is not observed by the observer 6.

As described above, in the image reproduction device 100h of the present embodiment, since the direct light 13 of the reproduction illumination light 10 emitted from the reproduction light source 1h does not pass through the polarization plate 4, a reproduced image 11 in which glare of the direct light 13 of the reproduction illumination light 10 is suppressed is observed by the observer 6.

Next, the effects of the ghost images 71a and 71b caused by the external light 70 emitted from the external light source 7 such as the sun or a fluorescent lamp will be described.

In FIG. 8, the external light 70 from the external light source 7, when transmitted through the polarization plate 4, becomes linearly-polarized light the polarization plane of which is parallel to the first axial direction.

The external light 70 which has passed through the polarization plate 4 is linearly-polarized light the polarization plane of which is parallel to the first axial direction, and thus, when transmitted through the quarter-wave plate 5f, becomes left circularly-polarized light.

The external light 70 which has passed through the quarter-wave plate 5f is emitted from the second side toward the reflection hologram 2. As a result, the ghost image 71a is reproduced on the second side of the reflection hologram 2.

The light 72a of the ghost image 71a reproduced by the reflection hologram 2 is left circularly-polarized light, and thus, when transmitted through the quarter-wave plate 5f, becomes linearly-polarized light the polarization plane of which is parallel to the second axial direction. Thus, the light 72a of the ghost image 71a transmitted through the quarter-wave plate 5f is absorbed or reflected by the polarization plate 4 and is not observed by the observer 6.

Furthermore, in FIG. 8, the external light 70 which has passed through the reflection hologram 2 is left circularly-polarized light, and thus, when transmitted through the quarter-wave plate 5g, becomes linearly-polarized light the polarization plane of which is parallel to the second axial direction. Thus, the external light 70 which has passed through the quarter-wave plate 5g is reflected by the beam splitting element 3b. The external light 70 reflected by the beam splitting element 3b is linearly-polarized light the polarization plane of which is parallel to the second axial direction, and thus, when transmitted through the quarter-wave plate 5g, becomes right circularly-polarized light. The reflection hologram 2 is irradiated from the first side with the external light 70 which has passed through the quarter-wave plate 5g. As a result, the ghost image 71b is reproduced on the first side of the reflection hologram 2.

The light 72b of the ghost image 71b reproduced by the reflection hologram 2 is right circularly-polarized light, and thus, when transmitted through the quarter-wave plate 5g, becomes linearly-polarized light the polarization plane of which is parallel to the first axial direction. Thus, the light 72b of the ghost image 71b transmitted through the quarter-wave plate 5g passes through the beam splitting element 3b and proceeds in a direction opposite the observer 6, and is not observed by the observer 6.

As described above, in the image reproduction device 100h of the present embodiment, since neither of the light 72a and the light 72b of the ghost images 71a and 71b generated by the external light 70 pass through the polarization plate 4, a sharp reproduced image 11 without the ghost images 71a and 71b is observed by the observer 6.

Next, the influence of the reflected light 73 of the external light 70 emitted from the external light source 7 will be described.

In FIG. 8, the reflected light 73 of the external light 70 which has been reflected by the beam splitting element 3b and which has passed through the quarter-wave plate 5g and the reflection hologram 2 is right circularly-polarized light, and thus, when transmitted through the quarter-wave plate 5f, becomes linearly-polarized light the polarization plane of which is parallel to the first axial direction. Thus, the reflected light 73 of the external light 70 which has passed through the quarter-wave plate 5f passes through the polarization plate 4 and is observed by the observer 6. However, since the amount of light of the external light 70 observed by the observer 6 decreases by approximately one-half when the external light 70 first passes through the polarization plate 4, the glare of the reflected light 73 of the external light 70 is reduced.

As described above, the image reproduction device of the present embodiment further comprises a polarization plate which is arranged on the second side of the reflection hologram opposite the first side, transmits the polarization component of the light incident thereon in the first axial direction, and does not transmit the polarization component in the second axial direction orthogonal to the first axial direction. The image reproduction device further comprises a first quarter-wave plate arranged between the reflection hologram and the polarization plate, and a second quarter-wave plate arranged between the reflection hologram and the beam splitting element. Further, the beam splitting element transmits the polarization component of light incident thereon in the first axial direction, reflects the polarization component in the second axial direction, and the reproduction light source emits the reproduction illumination light of linearly-polarized light parallel to the first axial direction.

Thus, the image reproduction device of the present embodiment, in addition to the effects of the fifth embodiment, can reproduce a bright reproduced image by efficiently utilizing the reproduction illumination light emitted from the reproduction light source, and can suppress the influence of ghost images caused by direct light from the reproduction light source and external light.

The embodiments described above merely illustrate examples for carrying out the present invention, and it should be understood that the technical scope of the present invention is not limited thereto. In other words, the present invention can be carried out in various forms without departing from the technical concept or main characteristics thereof.

For example, though the reflection hologram, the beam splitting element, the polarization plate, and the quarter-wave plate have been illustrated separated from each other by spaces for the sake of convenience in FIGS. 2 to 4 and 6 to 8, they are preferably arranged so as to overlap each other. Thus, the size of the image reproduction device is further reduced. Furthermore, since the edge of the reflection hologram, the beam splitting element, the polarization plate, or the quarter-wave plate does not overlap the light of the reproduced image regardless of the direction of observation, when the observer observes the reproduced image, discontinuous reproduction of the reproduced image at the edge is prevented.

## Claims

1. An image reproduction device, comprising:
a reflection hologram which reflects reproduction illumination light emitted from a first side to reproduce a reproduced image on the first side, and
a beam splitting element which is arranged on the first side of the reflection hologram, which reflects the reproduction illumination light which has been emitted from a reproduction light source and which has passed through the reflection hologram, which emits the reflected reproduction illumination light toward the reflection hologram from the first side, and which transmits light of a reproduced image reproduced by the reflection hologram.

2. The image reproduction device according to claim 1, further comprising:
the reproduction light source which is arranged on a second side of the reflection hologram opposite the first side, and which emits the reproduction illumination light toward the reflection hologram.

3. The image reproduction device according to claim 1 or 2, wherein the reflection hologram and the beam splitting element are arranged so as to overlap.

4. The image reproduction device according to claim 2, further comprising:
a quarter-wave plate which is arranged between the reflection hologram and the beam splitting element,
a polarization plate which is arranged on the side of the beam splitting element opposite the reflection hologram, and which absorbs a polarization component of light passing therethrough along a first axial direction, wherein
the reproduction light source emits the reproduction illumination light so that the reproduction illumination light which has passed through the quarter-wave plate becomes linearly-polarized light along the first axial direction.

5. The image reproduction device according to claim 2, further comprising:
a quarter-wave plate which is arranged between the reflection hologram and the beam splitting element, wherein
the beam splitting element 3 is a polarizing beam splitter which reflects a polarization component of reflected light along a first axial direction and which transmits a polarization component along a second axial direction orthogonal to the first axial direction, and
the reproduction light source emits the reproduction illumination light so that the reproduction illumination light which has passed through the quarter-wave plate becomes linearly-polarized light along the first axial direction.

6. The image reproduction device according to claim 5, further comprising:
a polarization plate which is arranged on the side of the beam splitting element opposite the reflection hologram, and which absorbs a polarization component of light passing therethrough along the first axial direction.

7. The image reproduction device according to any one of claims 4 to 6, wherein
the reflection hologram, the beam splitting element, and the quarter-wave plate are arranged so as to overlap.

8. An image reproduction device, comprising;
a reflection hologram which reflects reproduction illumination light emitted from a first side to reproduce a reproduced image on the first side, and
a beam splitting element which is arranged on the first side of the reflection hologram, which transmits a part or all of the reproduction illumination light to the reflection hologram, and which reflects a part or all of light of a reproduced image reproduced by the reflection hologram toward the reflection hologram.

9. The image reproduction device according to claim 8, further comprising:
a reproduction light source which is arranged on the first side of the reflection hologram, and which emits the reproduction illumination light toward the reflection hologram via the beam splitting element.

10. The image reproduction device according to claim 8 or 9, wherein
the reflection hologram and the beam splitting element are arranged so as to overlap.

11. The image reproduction device according to claim 9, further comprising:
a polarization plate which is arranged on a second side of the reflection hologram opposite the first side, which transmits a polarization component of light incident thereon in a first axial direction, and which does not transmit a polarization component in a second axial direction orthogonal to the first axial direction, and
a quarter-wave plate which is arranged between the reflection hologram and the polarization plate, wherein
the beam splitting element transmits a part and reflects a part of light incident thereupon, and
the reproduction light source emits the reproduction illumination light of circularly-polarized light which becomes linearly-polarized light parallel to the first axial direction when it passes through the quarter-wave plate one time.

12. The image reproduction device according to claim 9, further comprising:
a polarization plate which is arranged on a second side of the reflection hologram opposite the first side, which transmits a polarization component of light incident thereon in a first axial direction, and which does not transmit a polarization component in a second axial direction orthogonal to the first axial direction, and
a quarter-wave plate which is arranged between the reflection hologram and the beam splitting element, wherein
the beam splitting element transmits a part and reflects a part of light incident thereupon, and
the reproduction light source emits the reproduction illumination light of circularly-polarized light which becomes linearly-polarized light parallel to the first axial direction when it passes through the quarter-wave plate one time.

13. The image reproduction device according to claim 9, further comprising:
a polarization plate which is arranged on a second side of the reflection hologram opposite the first side, which transmits a polarization component of light incident thereon in a first axial direction, and which does not transmit a polarization component in a second axial direction orthogonal to the first axial direction,
a first quarter-wave plate which is arranged between the reflection hologram and the polarization plate, and
a second quarter-wave plate which is arranged between the reflection hologram and the beam splitting element, wherein
the beam splitting element transmits a polarization component of light incident thereupon in the first axial direction and reflects a polarization component in the second axial direction, and
the reproduction light source emits the reproduction illumination light of linearly-polarized light parallel to the first axial direction.

14. The image reproduction device according to any one of claims 11 to 13, wherein
the reflection hologram, the beam splitting element, the polarization plate, and the quarter-wave plate are arranged so as to overlap.
